**Europäisches Patentamt**

**European Patent Office**

**Office européen des brevets**

(19)

(11) Numéro de publication: **0 288 377**
**B1**

(12) # FASCICULE DE BREVET EUROPEEN

(45) Date de publication du fascicule du brevet:
**22.08.90**

(51) Int. Cl.⁵: **B64C 25/66, B64C 25/32**

(21) Numéro de dépôt: **88400952.3**

(22) Date de dépôt: **20.04.88**

(54) **Système de roulement pour aéronef.**

(30) Priorité: **24.04.87 FR 8705835**

(43) Date de publication de la demande:
**26.10.88 Bulletin 88/43**

(45) Mention de la délivrance du brevet:
**22.08.90 Bulletin 90/34**

(84) Etats contractants désignés:
**DE GB**

(56) Documents cités:
**US-A- 1 753 938**
**US-A- 2 732 152**
**US-E- 15 688**

(73) Titulaire: **AEROSPATIALE SOCIETE NATIONALE INDUSTRIELLE Société Anonyme dite:, 37, Boulevard de Montmorency, F-75016 Paris(FR)**

(72) Inventeur: **Foreau, Bernard, 12 avenue F. Mistral, F-31700 Blagnac(FR)**
Inventeur: **Pichon, Alain, 135, rue G. Doumergue, F-31170 Tournefeuille(FR)**
Inventeur: **Nazair-Blanc, Claude, 6, rue Averseug-Delorme, F-31000 Toulouse(FR)**

(74) Mandataire: **Bonnetat, Christian et al, CABINET BONNETAT 23, Rue de Léningrad, F-75008 Paris(FR)**

ACTORUM AG

**Description**

La présente invention concerne un dispositif de roulement pour aéronef.

On sait que le dispositif de roulement d'un avion, notamment d'un avion gros porteur, comporte plusieurs atterrisseurs, dont le nombre et la structure dépendent, à la fois, des caractéristiques dynamiques de l'avion au sol et des caractéristiques des pistes de roulement des aérodromes.

Ainsi, une réglementation internationale définit un coefficient lié à un type d'avion et appelé nombre ACN (nombre de classification d'avion) et un coefficient lié à une piste et appelé nombre PCN (nombre de classification de pavement), et, afin d'éviter des endommagements excessifs d'une piste, on veille à ce que les avions qui y atterrissent ou en décollent présentent un nombre ACN qui soit inférieur au nombre PCN de ladite piste.

Ainsi, lorsqu'il est envisagé qu'un avion gros porteur puisse utiliser une piste peu résistante, il est indispensable de prévoir de nombreux atterrisseurs.

Dans le cas où les atterrisseurs sont destinés à supporter les mêmes efforts et à assurer les mêmes fonctions, ils présentent des structures complexes identiques, avec système élastique et système amortisseur, et ils nécessitent des renforcements de la structure de l'avion à chacun des point de celle-ci auxquels ils sont reliés. Il en résulte un accroissement considérable de la masse et du coût de l'avion. De plus, il est généralement nécessaire de prévoir un système de répartition d'effort entre ces nombreux atterrisseurs, afin de permettre la compensation des dénivellations de piste. Il en résulte un accroissement supplémentaire de masse et de coût.

La présente invention a pour objet de remédier à ces inconvénients.

A cette fin, selon l'invention, le dispositif de roulement pour aéronef, comportant des atterrisseurs télescopiques qui prennent appui sur le sol par l'intermédiaire de roues et qui présentent une longueur variable en fonction de la charge qui leur est appliquée par ledit aéronef, est caractérisé en ce qu'il comporte au moins une jambe de roulement formée par un ensemble de vérin et par au moins un organe de roulement sur lequel ledit ensemble de vérin exerce une force constante et en ce que ledit ensemble de vérin est susceptible de communiquer audit organe de roulement au moins deux positions relatives de retrait par rapport aux roues desdits atterrisseurs télescopiques lorsque ledit aéronef roule sur le sol, la première de ces positions étant telle que ledit organe de roulement est maintenu à l'écart du sol quel que soit l'enfoncement desdits atterrisseurs télescopiques sous la charge qui leur est appliquée par l'aéronef, tandis que la seconde desdites positions est telle que ledit organe de roulement est mis au contact du sol lorsque la longueur desdits atterrisseurs télescopiques correspond à un seuil prédéterminé de charge appliqué à ceux-ci, ledit seuil étant inférieur à la charge correspondant au décollage. De préférence, ledit seuil est également inférieur à la charge correspondant au roulage sur le sol après atterrissage.

Ainsi, grâce à la présente invention, ledit ensemble de vérin et son organe de roulement peuvent n'agir, comme atterrisseur auxiliaire, que pendant le roulage avant le décollage, le décollage et, éventuellement mais avantageusement, le roulage après atterrissage. En effet, ladite première position peut être utilisée lors de la prise de contact de l'aéronef avec le sol lors de l'atterrissage, tandis que la seconde peut être utilisée au roulage.

L'invention est basée sur la constatation que la charge appliquée par un avion sur son dispositif de roulement varie fortement en fonction de la configuration de roulement. En effet, au moment de l'atterrissage (impact) la portance de l'avion est encore importante de sorte que la charge appliquée sur les atterrisseurs est relativement modérée. En revanche, au roulage et surtout au décollage, au moment de la rotation notamment, la charge appliquée aux atterrisseurs est beaucoup plus importante (presque le double).

Puisque, selon la présente invention, le ou les atterrisseurs auxiliaires n'interviennent pas au moment de l'atterrissage, il n'y a plus aucune raison pour qu'ils présentent une conception identique à celle des atterrisseurs principaux, avec système élastique et système amortisseur. La structure du ou des atterrisseurs auxiliaires conformes à l'invention peut donc être simplifiée et allégée. De plus, puisque ce ou ces atterrisseurs auxiliaires ont pour rôle de réduire les endommagements subis par les pistes en limitant la charge maximale appliquée aux atterrisseurs principaux, ils permettent une diminution du dimensionnerment de ceux-ci. Ils peuvent de plus être de structure simple et légère et être fonctionnellement indépendants des atterrisseurs principaux, puisque ne participant pas à l'atterrissage et supportant un effort limité à une valeur préétablie. En outre, pour cette dernière raison, il n'est pas nécessaire de prévoir sur la structure de l'avion, aux endroits où ils sont reliés à celui-ci, des renforcements aussi importants que ceux prévus pour des atterrisseurs principaux.

De préférence, ladite jambe de roulement est articulée sous le fuselage ou sous la voilure de l'aéronef et peut occuper soit une position rentrée à l'intérieur dudit fuselage ou de ladite voilure, soit une position sortie au moins sensiblement verticale. Par ailleurs, ladite jambe de roulement peut prendre une position rétractée et une position d'extension correspondant respectivement auxdites première et seconde positions. La position rétractée est éventuellement choisie pour que, à l'arrêt lorsque l'aéronef repose sur le sol et que la jambe est en position sortie, l'organe de roulement de ladite jambe soit dégagé du sol, ce qui facilite le changement du ou des pneumatiques équipant cet organe de roulement.

De préférence, la position rétractée est essentiellement utilisée en vol, que la jambe soit sortie ou rentrée.

La position d'extension de la jambe de roulement est essentiellement utilisée en position sortie de ladite jambe. Dans cette position d'extension, si aucune charge n'est appliquée sur les atterrisseurs, le point le plus bas de l'organe de roulement de ladite jambe se trouve, au-dessus du point le plus bas des roues des atterrisseurs principaux, à une distance correspondant à l'enfoncement de ceux-ci lorsque ledit seuil prédéterminé de charge leur est appliqué.

Dans un mode avantageux de réalisation, ledit ensemble de vérin comporte :
- un vérin dont la cavité du cylindre est pourvue d'une saillie séparant ladite cavité en deux chambres communicantes, l'une desdites chambres contenant un piston pourvu d'une tige opposée à ladite saillie et traversant de façon étanche le fond correspondant dudit cylindre ;
- un premier orifice de passage de fluide disposé au voisinage de ladite saillie et en communication simultanée avec les deux chambres communicantes ;
- un second orifice de passage de fluide disposé dans ladite chambre contenant ledit piston, au voisinage dudit fond correspondant dudit cylindre ; et
- une ligne d'alimentation en fluide hydraulique à pression constante et une ligne de retour de fluide hydraulique, susceptibles d'être alternativement reliées auxdits premier et second orifices par l'intermédiaire d'un distributeur.

Ainsi, en position rétractée, ledit piston peut être au contact de ladite saillie, tandis que, en position d'extension, ledit piston est au contact dudit fond correspondant dudit cylindre.

De plus, le fluide hydraulique contenu dans l'autre desdites chambres dispose, du fait de sa liaison avec le circuit hydraulique de l'avion, d'une certaine fonction d'élasticité, lors du roulage de l'organe de roulement de la jambe sur le sol.

Pour renforcer encore cette fonction d'élasticité, il est avantageux que dans cette autre chambre du cylindre soit disposé un piston flottant délimitant, entre lui-même et le fond du cylindre opposé audit fond traversé par ladite tige de piston, une enceinte étanche dans laquelle est enfermé un fluide élastiquement compressible, par exemple de l'air.

Afin d'éviter une éventuelle surpression dans le cylindre du vérin, notamment en cas de variation rapide de l'état de ladite jambe de roulement, il est avantageux de prévoir un clapet de surpression disposé entre ledit premier orifice de passage de fluide et ladite ligne de retour de fluide.

Les figures du dessin annexé feront bien comprendre comment l'invention peut être réalisée. Sur ces figures, des références identiques désignent des éléments semblables.

Les figures 1 et 2 illustrent schématiquement et partiellement, respectivement en vue de face et en vue de côté, un avion pourvu de jambes de roulement conformes à la présente invention.

Les figures 3,4 et 5 montrent, en coupe longitudinale schématique, un mode de réalisation des jambes de roulement selon l'invention, respectivement en position rétractée, en position d'extension et en position de roulage ou d'arrêt.

La figure 6 est un diagramme illustrant l'enfoncement (ou rétraction) E des jambes de roulement des figures 3 à 5 en fonction de la charge C qui leur est appliquée.

Les figures 7 et 8 sont deux vues schématiques montrant les positions relatives des roues des atterrisseurs et de celles des jambes de roulement selon l'invention, respectivement lorsqu'aucune charge n'est appliquée et lorsqu'une charge supérieure à un seuil d'enfoncement des atterrisseurs est exercée sur ceux-ci.

La figure 9 est un diagramme illustrant le principe de la présente invention, représentant l'enfoncement E(en mm) des atterrisseurs et des jambes de roulement d'un avion expérimental gros porteur en fonction de la charge C (en tonnes) appliquée sur ceux-ci.

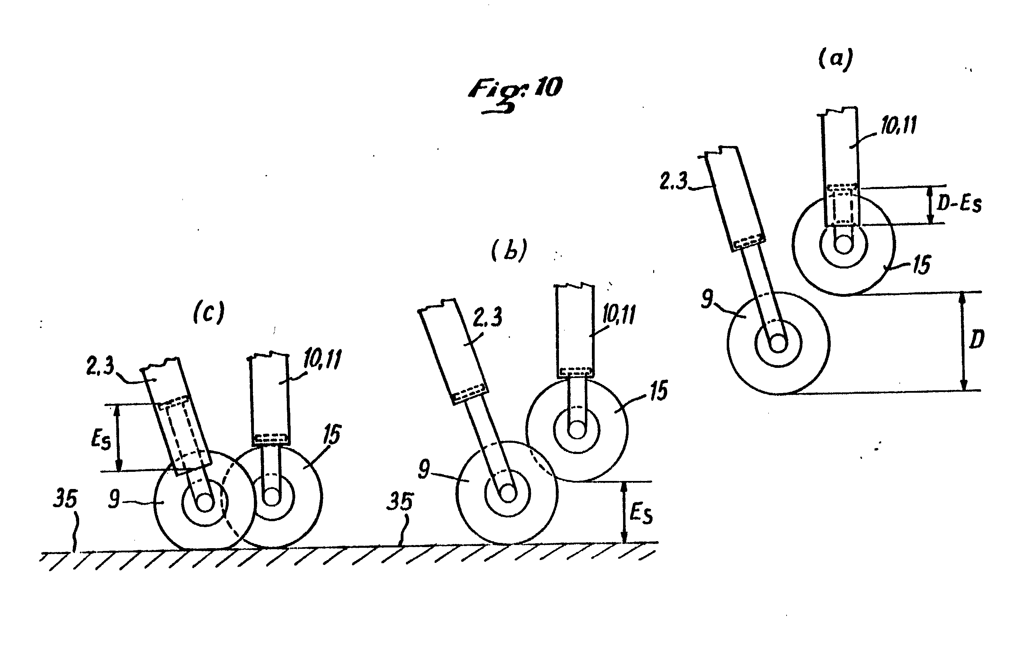

Les schémas de la figure 10 illustrent un mode de fonctionnement préférentiel du système de roulement conforme à l'invention.

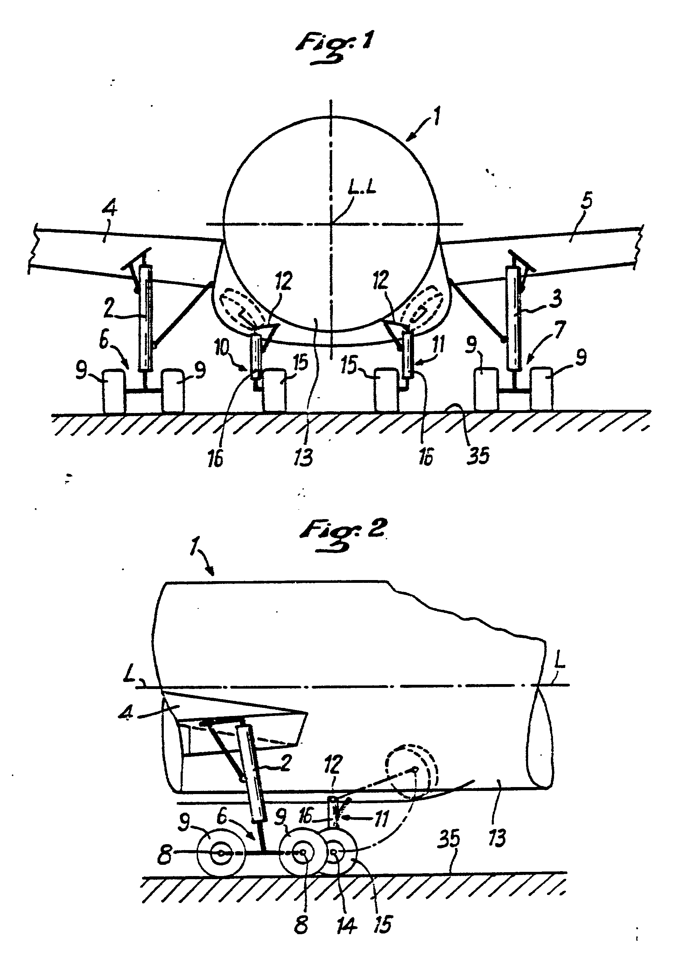

L'avion 1, schématiquement et partiellement représenté sur les figures 1 et 2, comporte un système atterrisseur principal constitué de deux atterrisseurs 2 et 3, disposés symétriquement par rapport à l'axe longitudinal L-L de l'avion et respectivement articulés sous les ailes 4 et 5 de celui-ci. Les atterrisseurs 2 et 3 présentent la structure générale connue d'un amortisseur télescopique et ne seront pas décrits plus en détail. On précisera seulement que, de façon également connue, chaque atterrisseur peut passer d'une position sortie (représentée sur les figures 1 et 2) à une position rentrée à l'intérieur des ailes (non illustrée) et vice-versa et que, à l'extrémité libre desdits atterrisseurs, sont articulés des boggies 6 et 7, pourvus de roues 8 équipées de pneumatiques 9.

De plus, l'avion 1 selon l'invention comporte deux jambes 10 et 11, articulées en 12, de façon connue et non représentée en détail, sous le fuselage 13 de l'avion 1 par une de leur extrémité. A leur extrémité libre, les jambes 10 et 11 portent au moins une roue 14 équipée d'un pneumatique 15. Grâce à leur articulation 12 sur le fuselage 13, et à des moyens d'actionnement connus et non représentés, les jambes 10 et 11 peuvent prendre soit une position sortie (représentée en trait plein sur les figures 1 et 2), soit une position rentrée à l'intérieur dudit fuselage 13 (représentée en pointillés sur ces figures).

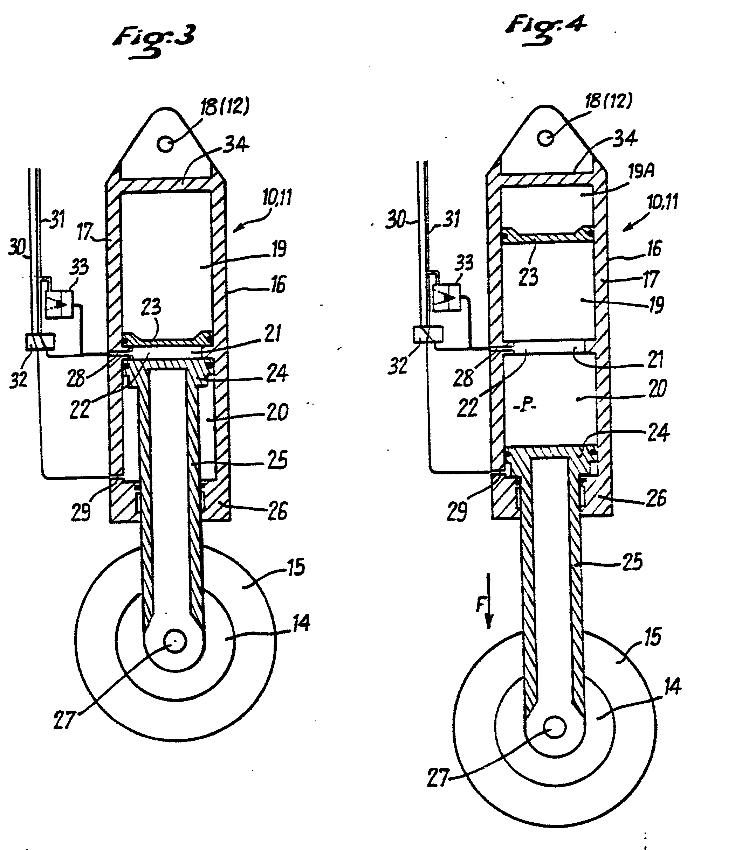

Comme le montrent les figures 3 et 4, chaque jambe 10 ou 11 est constituée essentiellement par un vérin 16 dont le corps 17 comporte à une de ses extrémités un alésage 18, permettant l'articulation (en 12) de la jambe correspondante sur le fuselage 13.

La cavité intérieure du corps 17 est partagée en deux chambres 19 et 20 par une nervure annulaire 21, ménageant un large passage de communication 22 entre les deux chambres 19 et 20.

Dans la chambre 19, qui se trouve du côté de l'alésage 18 et qui est fermée par un fonds 34, est disposé un piston flottant 23, tandis que, dans la chambre opposée 20, est disposé un piston 24, dont la tige 25 traverse, avec étanchéité, le fond 26 du corps 17, à l'opposé de l'alésage 18. L'extrémité libre de la tige 25, extérieure audit corps 17, est munie d'un arbre 27, pour le montage en rotation d'une roue 14.

Dans l'épaisseur de la nervure annulaire de séparation 21 est prévu un orifice de passage de fluide 28. De plus, un orifice de passage de fluide 29 est prévu dans la chambre 20, au voisinage du fond 26. Les orifices de passage de fluide 28 et 29 sont reliés à une ligne d'alimentation 30 en fluide hydraulique à pression constante et à une ligne de retour 31 de fluide hydraulique, par l'intermédiaire d'un distributeur 32. En outre, un clapet de surpression 33 est monté entre l'orifice de passage 28 et la ligne de retour 31.

Lorsque, comme cela est représenté sur la figure 3, le distributeur 32 relie, d'une part, l'orifice de passage 29 avec la ligne d'alimentation sous pression 30 et, d'autre part, l'orifice de passage 28 avec la ligne de retour 31, le piston 24 est pressé par le fluide hydraulique contre la nervure annulaire de séparation 21, tandis que le piston 23 est appliqué contre celle-ci par la pression d'un fluide compressible, par exemple de l'air, contenue dans la chambre 19A délimitée entre ledit piston flottant 23 et ledit fond 34.

Lorsque, au contraire et comme cela est représenté sur la figure 4, le distributeur 32 relie, d'une part, l'orifice de passage 29 avec la ligne de retour 31 et, d'autre part, l'orifice de passage 28 avec la ligne d'alimentation sous pression 30, le piston 24 est repoussé jusqu'à venir en butée contre le fond 26 (la tige 25 étant alors en position d'extension), tandis que le piston flottant 23 est repoussé jusqu'à une position pour laquelle la pression du fluide (air), se trouvant dans la partie 19A de la chambre 19 comprise entre ledit piston flottant 23 et le fond 34, équilibre la pression du fluide hydraulique poussant le piston flottant 23.

Ainsi, on voit que la tige de piston 25 (et donc la roue 14 qu'elle porte) peut occuper soit la position rétractée de la figure 3, soit la position d'extension de la figure 4. Il est avantageux que la position d'extension ne soit utilisée que lorsque les jambes 10 et 11 sont sorties du fuselage 13, et que la position rétractée soit utilisée aussi bien lorsque les jambes 10 et 11 sont rentrées dans le fuselage 13 ou sorties de celui-ci. Ainsi, en position sortie des jambes 10,11 hors du fuselage 13, celles-ci peuvent occuper, au choix, la position rétractée de la figure 3 ou la position d'extension de la figure 4.

Dans cette position d'extension de la figure 4, la tige de piston 25 est maintenue repoussée vers l'extérieur par une force constante F qui est égale au produit de la pression constante P du fluide hydraulique, emplissant l'espace intérieur du corps 17 compris entre les pistons 23 et 24, par la section S dudit piston 24.

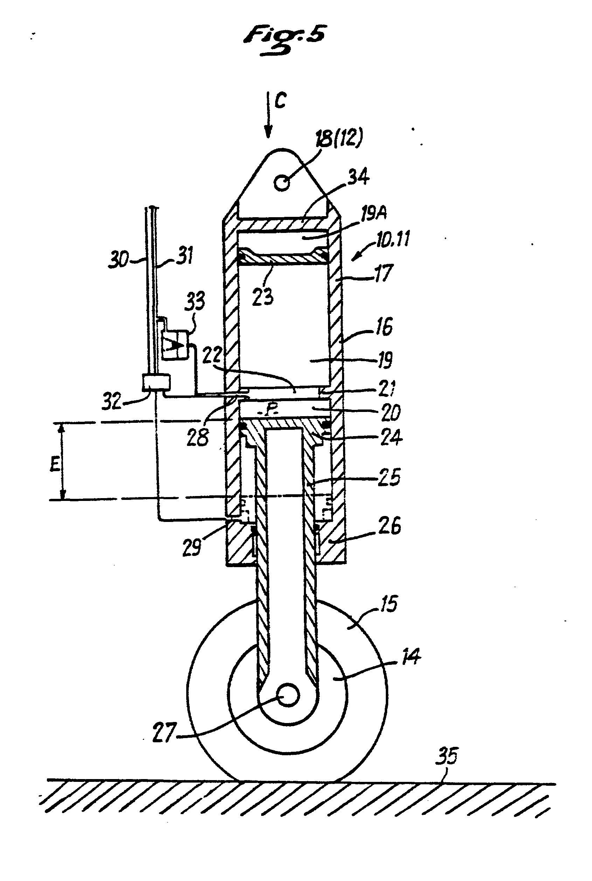

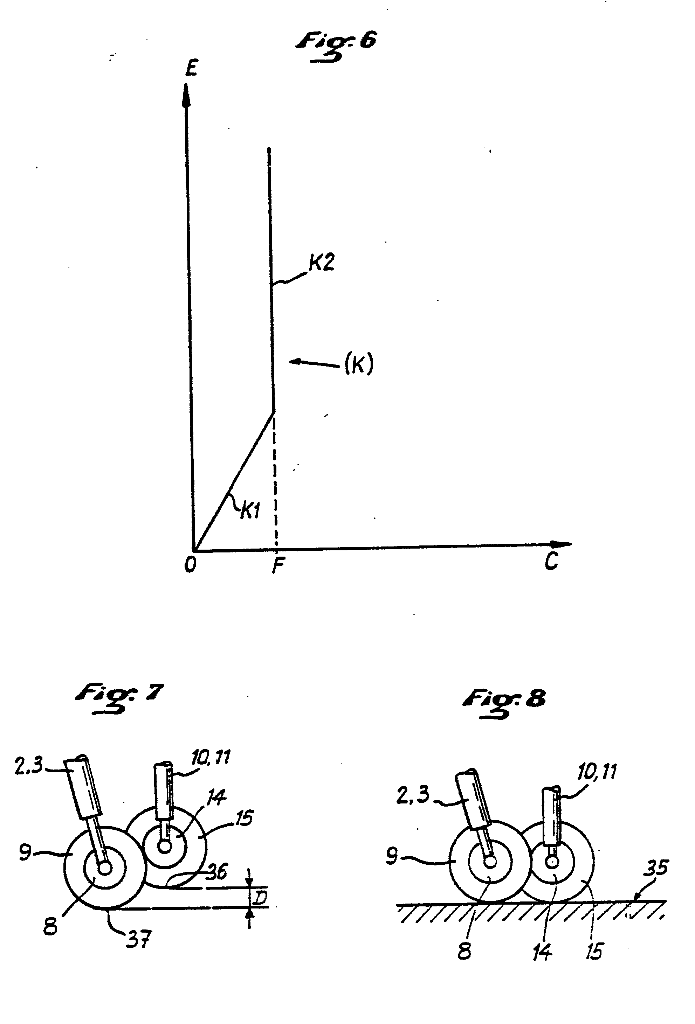

Sur la figure 5, on a illustré la situation suivant laquelle une jambe 10,11, étant dans sa position d'extension avec son pneumatique 15 en appui sur le sol 35, subit une charge longitudinale (au moins sensiblement verticale) C, tandis que sur la figure 6 on a illustré la courbe K représentative de l'enfoncement E en fonction de ladite charge C.

Si la charge C est inférieure à la force F (partie K1 de la courbe K), le piston 24 reste en appui contre le fond 26 du vérin 16 et seul le pneumatique 15 se déforme.

En revanche, si la charge C tend à devenir supérieure à la force F (partie K2 de la courbe K), le piston 24 remonte à l'intérieur dudit vérin 16 en opposant constamment une résistance constante égale à la force F.

Le liquide hydraulique est refoulé dans la ligne d'alimentation 30, à travers l'orifice 28 et le distributeur 32.

Si, dans le cas où la charge C étant égale à la force F, cette charge C varie rapidement autour de cette valeur F, les pistons 23 et 24 suivent la variation de charge, et le fluide gazeux comprimé contenu dans la partie supérieure 19A de la chambre 19 joue le rôle d'un ressort. Le clapet de surpression 33 permet au liquide hydraulique remplissant l'espace entre les pistons 23 et 24 de s'échapper par la ligne de retour 31, dans le cas où le débit à travers la ligne d'alimentation 30 n'est pas assez important.

Si la charge C diminue à partir d'une situation pour laquelle elle était égale à la force F, la jambe 10,11 s'allonge sous l'action de cette force constante F jusqu'à ce que, si la charge C devient inférieure à la force F, le piston 24 arrive en butée contre le fond 26 du vérin 16. A partir de cette situation, seule la déformation des pneumatiques intervient pour encaisser la charge C.

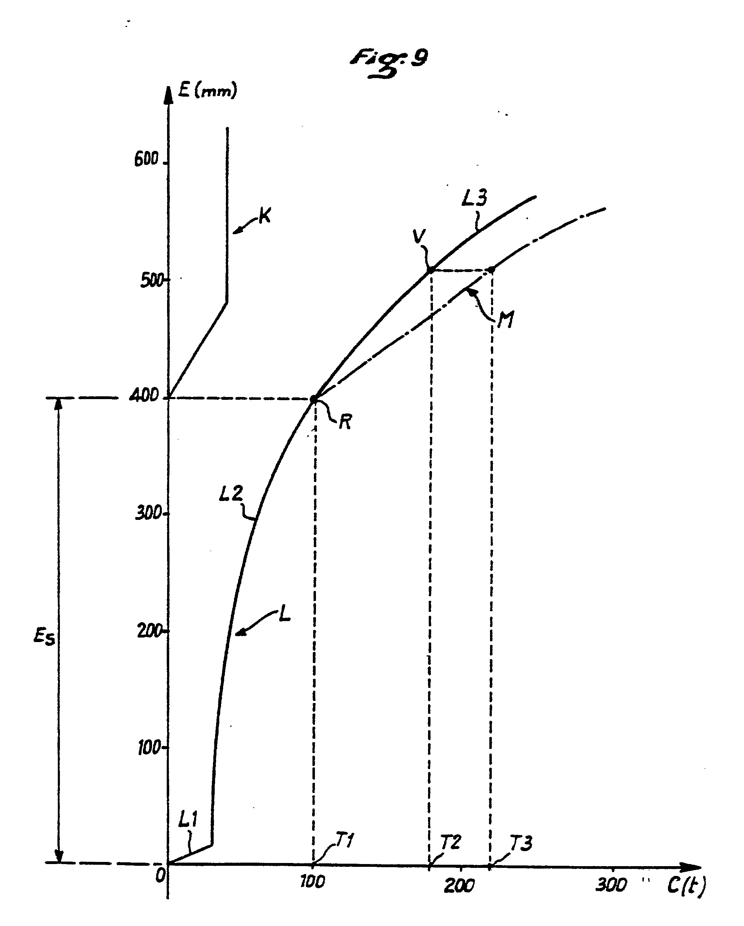

Comme on l'a représenté sur la figure 7, lorsque les atterrisseurs 2,3 et les jambes 10,11 (rétractées) sont sortis, et lorsque l'avion 1 n'exerce aucune charge sur les atterrisseurs, ni sur lesdites jambes (ce qui est par exemple le cas lorsque l'avion 1 est en l'air et s'apprête à atterrir), le point le plus bas 36 de la roue 14,15 des jambes 10,11 se trouve à une distance D au-dessus du point le plus bas 37 des roues 8,9 des atterrisseurs 2,3.

En revanche (voir la figure 8), lorsque l'avion 1 roule sur le sol 35, par exemple après l'impact d'atterrissage ou avant le décollage, ou bien encore lorsque l'avion 1 repose à l'arrêt sur le sol 35, la roue 14,15 des jambes 10,11 est en appui sur ledit sol, comme les roues 8,9 des atterrisseurs 2,3, par suite de l'enfoncement de ceux-ci sous l'action de la charge exercée sur eux par ledit avion 1.

Il va de soi que la structure schématique des jambes 10,11 donnée par les figures 3,4 et 5 (seulement destinées à faire comprendre l'invention) n'est pas limitative. Les jambes 10,11 pourraient notamment être réalisées sous forme de vérins à chambres annulaires.

Le diagramme de la figure 9, relatif à un avion expérimental, fera bien comprendre le rôle de délestage joué par les jambes 10,11 au fur et à mesure que les atterrisseurs 2,3 sont chargés par le poids de l'avion. Au diagramme de la figure 9, sont associés les schémas de la figure 10.

Ce diagramme montre, entre autres, la courbe L illustrant la variation de l'enfoncement E des seuls atterrisseurs 2 et 3 en fonction de la charge C appliquée à ceux-ci.

Lorsque la charge C est très faible, seuls les pneumatiques 9 se déforment, ce qui est représenté par la partie L1 de ladite courbe L. En revanche, lorsque la charge C est importante, les atterrisseurs eux-mêmes se rétractent, ce qui correspond aux parties L2 et L3 de la courbe L ayant par exemple l'allure parabolique représentée sur la figure 9.

Sur la figure 9, on a représenté également la caractéristique K des jambes 10,11 et on a supposé que lesdites jambes 10,11 étaient susceptibles d'assister les atterrisseurs 2,3 dès que le seuil de charge T1 (correspondant à un enfoncement $\underline{Es}$) était atteint (point R).

Sur la figure 10, on a illustré le mode de fonctionnement préférentiel du système de roulement conforme à l'invention.

Lorsque l'avion 1 s'apprête à atterrir (schéma a), les atterrisseurs 2,3 et les jambes 10,11 sont en position sortie ; toutefois, lesdites jambes 10,11 sont en position rétractée (première position), c'est-à-dire que la distance $\underline{D}$ séparant les points les plus bas 36 et 37 des roues 14,15 et 8,9 est supérieure à l'enfoncement $\underline{Es}$ correspondant à la charge T1 et que la rétraction des jambes 10,11 est alors égale à D-Es.

A l'instant où les roues 8,9 des atterrisseurs 2,3 touchent le sol 35 (schéma b), les jambes 10,11 sont commandées à l'extension (seconde position) et la distance séparant les points les plus bas 36 et 37 des roues 14,15 et 8,9 est, à cet instant, égale à $\underline{Es}$. La commande d'extension des jambes 10,11 est avantageusement automatique et commandée par des détecteurs d'impact montés sur les atterrisseurs 2,3.

Sous la charge appliquée par l'avion, les atterrisseurs 2,3 s'enfoncent. Jusqu'à une charge T1, seuls lesdits atterrisseurs 2,3 s'enfoncent suivant les positions de courbes L1 et L2 de la figure 9. A partir du point R (schéma c) de la figure 10, c'est-à-dire pour un enfoncement $\underline{Es}$ correspondant au seuil de charge T1 des atterrisseurs 2,3, les jambes de roulement 10,11 commencent leur fonction de délestage en suivant la courbe K. La courbe M indique la charge supportée par l'ensemble des atterrisseurs 2,3 et des jambes 10,11 en fonction de l'enfoncement E, tandis que la portion L3 de la courbe L précise la charge que supportent les seuls atterrisseurs 2,3.

La figure 9 montre qu'au point V, pour une charge T3 supérieure à T2, les atterrisseurs 2,3 ne supportent que la charge T2, les jambes 10,11 supportant alors la charge T3-T2.

Bien que sur les figures 1 et 2 on ait représenté deux jambes 10,11 articulées sous le fuselage, il va de soi que ces jambes pourraient être montées sous la voiture 4,5.

De plus, le nombre de jambes peut être différent et on peut par exemple prévoir une seule jambe 10 sous le fuselage, disposée dans le plan de symétrie longitudinal de l'avion 1.

## Revendications

1. Dispositif de roulement pour aéronef, comportant des atterrisseurs télescopiques (2, 3) qui prennent appui sur le sol (35) par l'intermédiaire de roues (8, 9) et qui présentent une longueur variable en fonction de la charge (C) qui leur est appliquée par ledit aéronef (1), caractérisé en ce qu'il comporte au moins une jambe de roulement (10, 11) formée par un ensemble de vérin (16, 30, 31, 32) et par au moins un organe de roulement (14, 15), sur lequel ledit ensemble de vérin exerce une force constante (F) et en ce que ledit ensemble de vérin (16, 30, 31, 32) est susceptible de communiquer audit organe de roulement (14, 15) au moins deux positions relatives de retrait par rapport aux roues desdits atterrisseurs télescopiques lorsque ledit aéronef roule sur le sol, la première de ces positions étant telle que ledit organe de roulement (14, 15) est maintenu à l'écart du sol quel que soit l'enfoncement desdits atterrisseurs télescopiques sous la charge qui leur est appliquée par l'aéronef, tandis que la seconde desdites positions est telle que ledit organe de roulement (14, 15) est mis en contact du sol lorsque la longueur desdits atterrisseurs télescopiques (2, 3) correspond à un seuil prédéterminé de charge (T1) appliqué à ceux-ci, ledit seuil (T1) étant inférieur à la charge correspondant au décollage.

2. Dispositif selon la revendication 1, caractérisé en ce que ladite jambe de roulement (10, 11) est articulée sous le fuselage (13) ou sous la voiture (4, 5) de l'aéronef (1) et peut occuper soit une position rentrée à l'intérieur dudit fuselage ou de ladite voilure, soit une position sortie au moins sensiblement verticale.

3. Dispositif selon l'une quelconque des revendications 1 ou 2, caractérisé en ce que ladite jambe de roulement (10, 11) peut prendre une position rétractée et une position d'extension.

4. Dispositif selon la revendication 3, caractérisé en ce que, lorsque ladite jambe de roulement (10, 11) est à la fois en position sortie et en position rétractée, lorsque l'aéronef (1) repose sur le sol (35) à l'arrêt, l'organe de roulement (14, 15) est dégagé du sol.

5. Dispositif selon la revendication 3, caractérisé en ce que, lorsque ladite jambe de roulement (10, 11) est à la fois en position sortie et en position d'extension et lorsque aucune charge n'est appliquée sur les atterrisseurs, le point le plus bas de l'organe de roulement (14, 15) de ladite jambe (10, 11) se trouve, au-dessus du point le plus bas des roues (8, 9) des atterrisseurs (2, 3), à une distance ($E_S$) correspondant à l'enfoncement de ceux-ci lorsque ledit seuil prédéterminé de charge (T1) leur est appliqué.

6. Dispositif selon l'une quelconque des revendications 1 à 5, caractérisé en ce que ledit ensemble de vérin (16, 30, 31, 32) comporte:
– un vérin (16) dont la cavité du cylindre (17) est pourvue d'une saillie (21) séparant ladite cavité en deux chambres communicantes (19 et 20), l'une (20) desdites chambres contenant un piston (24) pourvu d'une tige (25) opposée à ladite saillie (21) et traversant de façon étanche le fond correspondant (26) dudit cylindre (17) ;
– un premier orifice de passage de fluide (28) disposé au voisinage de ladite saillie (21) et en communication simultanée avec les deux chambres communicantes (19 et 20);
– un second orifice de passage de fluide (29), disposé dans ladite chambre (20) contenant ledit piston (24), au voisinage dudit fond correspondant (26) dudit cylindre (17); et
– une ligne (30) d'alimentation en fluide hydraulique à pression constante et une ligne (31) de retour de fluide hydraulique susceptibles d'être alternativement reliées auxdits premier et second orifices par l'intermédiaire d'un distributeur (32).

7. Dispositif selon les revendications 3 et 6, caractérisé en ce que, en position rétractée, ledit piston (24) est au contact de ladite saillie (21), et en ce que, en position d'extension, ledit piston (24) est au contact dudit fond correspondant (26) dudit cylindre (17).

8. Dispositif selon l'une des revendications 6 ou 7, caractérisé en ce que dans l'autre (19) desdites chambres du cylindre (17) est disposé un piston flottant (23) délimitant, entre lui-même et le fond (34) du cylindre (17) opposé au fond (26) traversé par ladite tige de piston (25), une enceinte étanche (19A) dans laquelle est enfermé un fluide gazeux élastiquement compressible.

9. Dispositif selon l'une quelconque des revendications 6 à 8, caractérisé en ce qu'un clapet de surpression (33) est disposé entre ledit premier orifice de passage de fluide (28) et ladite ligne de retour de fluide (31).

## Patentansprüche

1. Fahrwerk für ein Luftfahrzeug mit Teleskop-Fahrgestellen (2, 3), die sich am Boden (35) über Räder (8, 9) abstützen und eine variable Länge je nach Belastung (c) durch das Luftfahrzeug (1) aufweisen, gekennzeichnet durch wenigstens eine Fahrstrebe (10, 11), die von einem Stellgliedsystem (16, 30, 31, 32) und wenigstens einem Rollelement (14, 15) gebildet wird, auf das das Stellgliedsystem eine konstante Kraft (F) ausübt, wobei das Stellgliedsystem (16, 30, 31, 32) erlaubt, dem Rollelement (14, 15) wenigstens zwei relative Rückzugspositionen bezüglich der Räder der Teleskop-Fahrgestelle zu übertragen, wenn das Luftfahrzeug auf dem Boden rollt, wobei die erste dieser Positionen die ist, in der das Rollelement (14, 15) im Abstand vom Boden gehalten wird, wie auch immer die Eindringtiefe der Teleskop-Fahrgestelle unter der Last des Luftfahrzeuges ist, während die zweite der Positionen die ist, in der das Rollelement (14, 15) in Kontakt mit dem Boden ist, wenn die Länge der Teleskop-Fahrgestelle (2, 3) einer vorgegebenen, ihnen aufgebrachten Lastschwelle (T1) entspricht, wobei diese Schwelle (T1) kleiner als die Last am Abheben ist.

2. Fahrwerk nach Anspruch 1, dadurch gekennzeichnet, daß die Fahrstrebe (10, 11) unter dem Rumpf (13) oder unter einem Tragflügel (4, 5) des Luftfahrzeuges (1) angelenkt ist und entweder eine ins Innere des Rumpfes oder des Tragflügels zurückgezogene Stellung oder eine ausgefahrene, im wesentlichen vertikale Stellung einnehmen kann.

3. Fahrwerk nach einem der Ansprüche 1 oder 2, dadurch gekennzeichnet, daß die Fahrstrebe (10, 11) eine zusammengezogene oder eine verlängerte Stellung einnehmen kann.

4. Fahrwerk nach Anspruch 3, dadurch gekennzeichnet, daß das Rollelement (14, 15) vom Boden (35) entfernt ist, wenn die Fahrstrebe (10, 11) gleichzeitig in ausgefahrener und in zusammengezogener Stellung ist, wenn das Luftfahrzeug (1) auf dem Boden bei Halt ruht.

5. Fahrwerk nach Anspruch 3, dadurch gekennzeichnet, daß der niedrigste Punkt des Rollelementes (14, 15) der Fahrstrebe (10, 11), wenn die Fahrstrebe (10, 11) gleichzeitig in ausgefahrener und in verlängerter Stellung ist und keine Last auf die Fahrgestelle wirkt, sich oberhalb des niedrigsten Punktes der Räder (8, 9) der Fahrgestelle (2, 3) in einem Abstand (E) entsprechend der Eindringtiefe befindet, wenn die vorbestimmte Lastschwelle (T1) auf sie aufgebracht wird.

6. Fahrwerk nach einem der Ansprüche 1 bis 5, dadurch gekennzeichnet, daß das Stellgliedsystem (16, 30, 31, 32) aufweist:
– ein Stellglied (16), dessen Zylinderhohlraum (17) mit einem den Hohlraum in zwei miteinander verbundene Kammern (19 und 20) aufteilenden Vorsprung (21) versehen ist, wobei die eine (20) der Kammern einen Kolben (24) mit einer Stange (25) entgegengesetzt zum Vorsprung (21) aufweist und die Stange (25) abgedichtet durch den betreffenden Boden (26) des Zylinders (17) läuft;
– eine erste, in der Nähe des Vorsprunges (21) angeordnete und mit beiden Kammern (19 und 20) verbundene Fluid-Durchtrittsöffnung (28);
– eine zweite, in der Kammer (20) mit dem Kolben (24) in der Nähe des entsprechenden Bodens (26) des Zylinders (17) angebrachte Fluid-Durchtrittsöffnung (29); und
– eine Zuführleitung (30) für das Hydraulikfluid unter konstantem Druck und eine Rückführleitung (31) für das Hydraulikfluid, wobei die Leitungen (30, 31) abwechselnd an die erste und zweite Öffnung (28, 29) mittels eines Verteilers (32) angeschlossen werden.

7. Fahrwerk nach den Ansprüchen 3 und 6, dadurch gekennzeichnet, daß der Kolben (24) in zusammengezogener Stellung in Kontakt mit dem Vorsprung (21) steht und daß er in verlängerter Stellung in Kontakt mit dem entsprechenden Boden (26) des Zylinders (17) steht.

8. Fahrwerk nach einem der Ansprüche 6 oder 7, dadurch gekennzeichnet, daß in der anderen (19) der Kammern des Zylinders (17) ein schwebender Kolben (23) angeordnet ist, der zwischen sich und dem Boden (34) des Zylinders (17) entgegengesetzt zum von der Kolbenstange (25) durchlaufenen Boden (26) einen abgedichteten Raum (19A) abgrenzt, in dem ein elastisch kompressibles, gasförmiges Fluid untergebracht ist.

9. Fahrwerk nach einem der Ansprüche 6 bis 8, dadurch gekennzeichnet, daß ein Überdruckventil (33) zwischen der ersten Fluid-Durchtrittsöffnung (28) und der Rückführleitung (31) für das Fluid angeordnet ist.

## Claims

1. Rolling device for aircraft, comprising telescopic landing gears (2, 3) which abut on the ground (35) via wheels (8, 9) and which present a variable length as a function of the load (C) which is applied thereto by said aircraft (1), characterized in that it comprises at least one rolling leg (10, 11) formed by a jack assembly (16, 30, 31, 32) and by at least one rolling member (14, 15), on which said jack assembly exerts a constant force (F) and in that said jack assembly (16, 30, 31, 32) is capable of communicating to said rolling member (14, 15) at least two relative positions of retraction with respect to the wheels of said telescopic landing gears when said aircraft rolls on the ground, the first of these positions being such that said rolling member (14, 15) is maintained spaced apart from the ground whatever the compression of said telescopic landing gears under the load that is applied thereto by the aircraft, whilst the second of said positions is such that said rolling member (14, 15) is placed in contact with the ground when the length of said telescopic landing gears (2, 3) corresponds to a predetermined load threshold (T1) applied thereto, said threshold (T1) being less than the load corresponding to take-off.

2. Device according to claim 1, characterized in that said rolling leg (10, 11) is articulated beneath the fuselage (13) or beneath the wings (4, 5) of the aircraft (1) and adapted to occupy either a retracted position inside said fuselage or said wings, or an extended, at least substantially vertical position.

3. Device according to any one of claims 1 or 2, characterized in that said rolling leg (10, 11) may take a drawn-in position and a drawn-out position.

4. Device according to claim 3, characterized in that when said rolling leg (10, 11) is both in extended position and in drawn-in position, when the aircraft (1) rests on the ground (35) in stopped position, the rolling member (14, 15) is distant from the ground.

5. Device according to claim 3, characterized in that, when said rolling leg (10, 11) is both in extended position and in drawn-out position and when no load is applied on the landing gears, the lowermost point of the rolling member (14, 15) of said leg (10, 11) lies, above the lowermost point of the wheels (8, 9) of the landing gears (2, 3), at a distance ($E_S$) corresponding to the compression thereof when said predetermined load threshold (T1) is applied thereto.

6. Device according to any one of claims 1 to 5, characterized in that said jack assembly (16, 30, 31, 32) comprises :

    — a jack (16) of which the cavity of the cylinder (17) is provided with a projection (21) separating said cavity into two communicating chambers (19 and 20), one (20) of said chambers containing a piston (24) provided with a rod (25) opposite said projection (21) and hermetically passing through the corresponding bottom (26) of said cylinder (17);

    — a first orifice for passage of fluid (28) disposed in the vicinity of said projection (21) and in simultaneous communication with the two communicating chambers (19 and 20);

    - a second orifice for passage of fluid (29) disposed in said chamber (20) containing said piston (24), in the vicinity of said corresponding bottom (26) of said cylinder (17); and

    — a line (30) for supply of hydraulic fluid at constant pressure and a line (31) for return of hydraulic fluid, capable of being alternately connected to said first and second orifices via a valve (32).

7. Device according to claims 3 and 6, characterized in that, in drawn-in position, said piston (24) is in contact with said projection (21), and, in drawn-out position, said piston (24) is in contact with said corresponding bottom (26) of said cylinder (17).

8. Device according to any one claims 6 or 7, characterized in that, in the other (19) of said chambers of the cylinder (17), there is disposed a floating piston (23) defining, between itself and the bottom (34) of the cylinder (17) opposite to the bottom (26) traversed by said piston rod (25), a tight enclosure (19A) which contains an elastically compressible gaseous fluid.

9. Device according to any one claims 6 to 8, characterized in that a relief valve (33) is disposed between said first orifice for passage of fluid (28) and said fluid return line (31).

*Fig. 1*

*Fig. 2*

Fig.3

Fig.4

Fig.5

## Fig. 6

## Fig. 7

## Fig. 8

Fig. 9

*Fig. 10*